# EUROPEAN PATENT SPECIFICATION

(11) **EP 3 892 462 B1**
(45) Date of publication and mention of the grant of the patent: **03.05.2023**
(21) Application number: 19893152.9
(22) Date of filing: 02.12.2019
(51) Int. Cl.: C08L 71/03, C08K 3/26, C08K 3/04, C08K 5/3465, C08G 65/333, B32B 1/08, B32B 25/04, B32B 25/12, B32B 25/16, B32B 27/30, B32B 25/02, B32B 25/14, B32B 27/32, B32B 27/34, B32B 27/36, B32B 27/40, B32B 27/42, C08G 65/24, F16L 11/04

(54) **EPIHALOHYDRIN-BASED RUBBER COMPOSITION, CROSS-LINKED RUBBER, RUBBER LAYERED PRODUCT, AND HOSE**
EPIHALOHYDRINBASIERTE KAUTSCHUKZUSAMMENSETZUNG, VERNETZTER KAUTSCHUK, GESCHICHTETES KAUTSCHUKPRODUKT UND SCHLAUCH
COMPOSITION DE CAOUTCHOUC À BASE D'ÉPIHALOHYDRINE, CAOUTCHOUC RÉTICULÉ, PRODUIT STRATIFIÉ À BASE DE CAOUTCHOUC ET TUYAU FLEXIBLE

(30) Priority: 07.12.2018 JP 2018230045; 24.04.2019 JP 2019083154
(43) Date of publication of application: 13.10.2021
(73) Proprietor: Zeon Corporation, Tokyo 100-8246 (JP)
(72) Inventor: MOSAKI, Shiho, Tokyo 100-8246 (JP)
(74) Representative: Maiwald GmbH
(86) International application number: PCT/JP2019/047031
(87) International publication number: WO 2020/116391

(56) References cited:
- WO-A1-2017/150300
- WO-A1-2018/079401
- WO-A1-2019/069766
- WO-A1-2019/163362
- JP-A- 2007 185 826
- JP-A- 2007 186 564
- JP-A- 2013 113 736

## Description

### TECHNICAL FIELD

The present invention relates to an epihalohydrin-based rubber composition, and more particularly, to an epihalohydrin-based rubber composition capable of providing a cross-linked rubber having an excellent balance in tear strength, heat resistance, compression set resistance, and creep resistance and exhibiting high adhesion when laminated with other rubber layer.

### BACKGROUND ART

An epihalohydrin-based rubber has an excellent performance balance in heat resistance, ozone resistance, and oil resistance, and is widely used in industrial products such as oil seals, diaphragms, gasket packing, and oil-resistant hoses such as fuel oil hoses. Further, since the epihalohydrin-based rubber is relatively inexpensive, for example, when used in an oil-resistant hose or a sealing material application, a fluororubber is used as an inner thin layer, and is sometimes used as a laminate of a fluororubber and an epihalohydrin-based rubber.

For example, Patent Document 1 discloses a vulcanized rubber in which an unvulcanized fluororubber composition and an unvulcanized epichlorohydrin-based rubber composition are bonded by heat vulcanization, the unvulcanized epichlorohydrin-based rubber composition containing a compounding agent composed of 0.1 to 10 parts by weight of a 2,3-dimercaptoquinoxaline derivative and 1 to 20 parts by weight of hydrotalcites with respect to 100 parts by weight of an epichlorohydrin-based rubber.

Patent Document 2 discloses (examples) a heat-resistant hose having a layered structure, wherein a rubber layer is formed from a rubber composition comprising a hydrin rubber, a quinoxaline, carbon black and a hydrotalcite compound.

### RELATED ART

### PATENT DOCUMENTS

Patent Document 1: JP-A-9-85898
Patent Document 2: JP 2007 185 826 A

### SUMMARY OF THE INVENTION

### PROBLEM TO BE SOLVED BY THE INVENTION

On the other hand, according to studies made by the present inventor, there has been a problem that a cross-linked rubber obtained using the epichlorohydrin-based rubber composition disclosed in Patent Document 1 described above is inferior in tear strength, heat resistance, and creep resistance. The present invention has been made in consideration of such a situation, it is an object of the present invention to provide an epihalohydrin-based rubber composition capable of providing a cross-linked rubber which has an excellent balance in tear strength, heat resistance, compression set resistance, and creep resistance and exhibits high adhesion when laminated with other rubber layer. Further, according to the present invention, it is also an object of the present invention to provide a cross-linked rubber, a rubber laminate, and a hose obtained using such an epihalohydrin-based rubber composition.

### MEANS FOR SOLVING THE PROBLEM

As a result of extensive studies to achieve the above object, the present inventor has found that, according to an epihalohydrin-based rubber composition comprising a carbon black having a specific iodine adsorption amount and a specific nitrogen adsorption specific surface, a specific amount of a quinoxaline-based cross-linking agent, and a specific amount of a hydrotalcite compound, the above problem can be solved, and thus, the present invention has been completed.

That is, according to the present invention, there is provided an epihalohydrin-based rubber composition comprising an epihalohydrin-based rubber, a carbon black, a quinoxaline-based cross-linking agent, and a hydrotalcite compound, wherein the carbon black has an iodine adsorption amount of 100 mg/g or more and a nitrogen adsorption specific surface area of 95 to 150 m²/g, a content of the quinoxaline-based cross-linking agent is 0.01 to 2 parts by weight with respect to 100 parts by weight of the epihalohydrin-based rubber, and a content of the hydrotalcite compound is more than 3 parts by weight and less than 10 parts by weight with respect to 100 parts by weight of the epihalohydrin-based rubber.

In the epihalohydrin-based rubber composition, it is preferable that the iodine adsorption amount of the carbon black is 110 to 150 mg/g.

In the epihalohydrin-based rubber composition, it is preferable that the nitrogen adsorption specific surface area of the carbon black is 110 to 145 m²/g.

In the epihalohydrin-based rubber composition, it is preferable that the hydrotalcite compound is a compound represented by the following general formula (1):

MgₓZn_{y}Al_{z}(OH)_{2(x+y)+3z-2}CO₃·mH₂O (1)

where, in the above general formula (1), x=1 to 10, y=0 to 9, x+y=1 to 10, z=1 to 5, "m" represents 0 or a positive real number.

Further, according to the present invention, there is provided a cross-linked rubber obtained by cross-linking the above epihalohydrin-based rubber composition.

In addition, according to the present invention, there is provided a rubber laminate comprising an epihalohydrin-based rubber layer (A) composed of the above epihalohydrin-based rubber composition, and a fluororubber layer (B) composed of a fluororubber composition comprising a fluororubber and a cross-linking agent.

In the rubber laminate, it is preferable that the epihalohydrin-based rubber layer (A) is a layer formed of a cross-linked product of the epihalohydrin-based rubber composition, and the fluororubber layer (B) is a layer formed of a cross-linked product of the fluororubber composition.

Further, according to the present invention, there is provided a hose obtained using the above rubber laminate.

### EFFECTS OF INVENTION

According to the present invention, it is possible to provide an epihalohydrin-based rubber composition capable of providing a cross-linked rubber which has an excellent balance in tear strength, heat resistance, compression set resistance, and creep resistance and exhibits high adhesion when laminated with other rubber layer. Further, according to the present invention, it is also possible to provide a cross-linked rubber, a rubber laminate and a hose obtained using such an epihalohydrin-based rubber composition.

### DESCRIPTION OF EMBODIMENTS

### <Epihalohydrin-based rubber composition>

An epihalohydrin-based rubber composition of the present invention is an epihalohydrin-based rubber composition containing an epihalohydrin-based rubber, a carbon black, a quinoxaline-based cross-linking agent, and a hydrotalcite compound, wherein the iodine adsorption amount of the carbon black is 100 mg/g or more, the nitrogen adsorption specific surface area of the carbon black is 95 to 150 m²/g, the content of the quinoxaline-based cross-linking agent is 0.01 to 2 parts by weight with respect to 100 parts by weight of the epihalohydrin-based rubber, and the content of the hydrotalcite compound is more than 3 parts by weight and less than 10 parts by weight with respect to 100 parts by weight of the epihalohydrin-based rubber.

### <Epihalohydrin-based rubber>

The epihalohydrin-based rubber used in the present invention is a rubber polymer containing at least an epihalohydrin monomer unit as an essential constitutional monomer unit, and specifically examples thereof include a homopolymer of one kind of epihalohydrin monomer, a copolymer of two or more kinds of epihalohydrin monomers, or a copolymer of an epihalohydrin monomer and a monomer copolymerizable therewith, but a copolymer of an epihalohydrin monomer and a monomer copolymerizable therewith is preferred. Further, as the epihalohydrin-based rubber, two or more kinds of polymers having different monomer compositions may be used in combination.

Examples of epihalohydrin monomer that forms epihalohydrin monomer unit include, for example, epichlorohydrin, epibromohydrin, epiiodohydrin, 2-methylepichlorohydrin, 2-methylepibromohydrin, and 2-ethylepichlorohydrin. One kind of thereof may be used alone, and two or more kinds thereof may be used in combination. Of these, epichlorohydrin is preferred from the viewpoint that the cross-linked rubber obtained by using the epihalohydrin-based rubber composition can be made more excellent in tear strength and compression set resistance.

In the epihalohydrin-based rubber, the content ratio of the epihalohydrin monomer unit is preferably 35 to 95 mol%, more preferably 40 to 90 molt, and still more preferably 45 to 85 mol%, based on the total monomer units constituting the epihalohydrin-based rubber. When an unsaturated epoxide monomer unit to be described later is contained in the epihalohydrin-based rubber, the content ratio of the epihalohydrin monomer unit is preferably set to 55 to 75 mol%, more preferably 55 to 70 mol%, and still more preferably 60 to 65 mol%, based on the total monomer units constituting the epihalohydrin-based rubber. By setting the content ratio of the epihalohydrin monomer unit within the above range, the obtained cross-linked rubber can be made more excellent in compression set resistance and heat resistance. When two or more kinds of polymers having different monomer compositions are used in combination, it is preferable to set the amount of the epihalohydrin monomer unit in the entire polymer having different monomer compositions within the above range.

In the case where the epihalohydrin-based rubber is a copolymer of an epihalohydrin monomer and a monomer copolymerizable with the epihalohydrin monomer, as a unit of the copolymerizable monomer, an alkylene oxide monomer unit is preferred from the viewpoint that the compression set resistance of the obtained cross-linked rubber can be made more excellent.

As the alkylene oxide monomer forming the alkylene oxide monomer unit, examples thereof include linear or branched alkylene oxides such as ethylene oxide, propylene oxide, 1,2-epoxybutane, 1,2-epoxy-4-chloropentane, 1,2-epoxyhexane, 1,2-epoxyoctane, 1,2-epoxydecane, 1,2-epoxyoctadecane, 1,2-epoxyeicosane, 1,2-epoxyisobutane, and 2,3-epoxyisobutane; cyclic alkylene oxides such as 1,2-epoxychloropentane, 1,2-epoxycyclohexane, 1,2-epoxycyclododecane; glycidyl ether having alkyl long chain or alkyl branched chain such as butyl glycidyl ether, 2-ethylhexyl glycidyl ether, 2-methyloctyl glycidyl ether, neopentyl glycol diglycidyl ether, decyl glycidyl ether, and stearyl glycidyl ether; glycidyl ethers having oxyethylene side chain such as ethylene glycol diglycidyl ether, diethylene glycol diglycidyl ether, polyethylene glycol diglycidyl ether; and the like, and these may be those having a substituent such as halogen atom. As the alkylene oxide monomer, one kind may be used alone, or two or more kinds may be used in combination. Among these, linear alkylene oxide is preferable, and ethylene oxide and propylene oxide are more preferable and ethylene oxide is particularly preferable from the viewpoint of making the obtained cross-linked rubber more excellent in tear strength and compression set resistance.

When the alkylene oxide monomer unit is contained in the epihalohydrin-based rubber, the content ratio of the alkylene oxide monomer unit is preferably 5 to 65 mol%, more preferably 10 to 60 mol%, and still more preferably 15 to 55 mol%, based on the total monomer units constituting the epihalohydrin-based rubber. When an unsaturated epoxide monomer unit to be described later is contained in the epihalohydrin-based rubber, the content ratio of the alkylene oxide monomer unit is preferably set to 22 to 44.9 mol%, more preferably 29 to 44.5 mol%, and still more preferably 34 to 39 mol%, based on the total monomer units constituting the epihalohydrin-based rubber. By setting the content ratio of the alkylene oxide monomer unit within the above range, it is possible to make the tear strength and heat resistance of the obtained cross-linked rubber more excellent. When two or more kinds of polymers having different monomer compositions are used in combination, it is preferable to set the amount of the alkylene oxide monomer unit in the entire polymer having different monomer compositions within the above range.

Further, the epihalohydrin-based rubber used in the present invention may further contain an unsaturated epoxide monomer unit as the unit of the copolymerizable monomer.

As the unsaturated epoxide monomer forming the unsaturated epoxide monomer unit, examples thereof include unsaturated glycidyl ether such as vinyl glycidyl ether, allyl glycidyl ether, and o-allylphenyl glycidyl ether; diene monoepoxides such as butadiene epoxide, chloroprene epoxide, 4,5-epoxy-2-pentene, epoxy-1-vinylcyclohexene, and 1,2-epoxy-5,9-cyclododecadiene; glycidyl esters of ethylenically unsaturated carboxylic acid such as glycidyl acrylate, glycidyl methacrylate, glycidyl crotonate, glycidyl-4-heptenate, glycidyl sorbate, glycidyl linoleate, 3-cyclohexene carboxylic acid glycidyl ester, 4-methyl-3-cyclohexene carboxylic acid glycidyl ester, and glycidyl-4-methyl-3-pentenate; and the like, and these may be those having a substituent such as halogen atom. As the unsaturated epoxide monomer, one kind may be used alone, or two or more kinds may be used in combination. Of these, unsaturated glycidyl ether is preferred, and allyl glycidyl ether is more preferred.

When the unsaturated epoxide monomer unit is contained in the epihalohydrin-based rubber, the content ratio of the unsaturated epoxide monomer unit is preferably 0.1 to 8 mol%, more preferably 0.5 to 6 mol%, and still more preferably 1 to 4 mol%, based on the total monomer units constituting the epihalohydrin-based rubber. When two or more kinds of polymers having different monomer compositions are used in combination, it is preferable to set the amount of the unsaturated epoxide monomer unit in the entire polymer having different monomer compositions within the above range.

The weight average molecular weight of the epihalohydrin-based rubber used in the present invention is preferably 200,000 to 2,000,000, and more preferably 400,000 to 1,500,000. By setting the weight average molecular weight within the above range, it is possible to further enhance the mechanical strength of the obtained cross-linked rubber while making the workability of the epihalohydrin-based rubber composition good.

The Mooney viscosity of the epihalohydrin-based rubber [ML1+4 (100°C)] is preferably 10 to 200, more preferably 20 to 150, and still more preferably 30 to 100. By setting the Mooney viscosity within the above range, it is possible to further enhance the mechanical strength of the obtained cross-linked rubber while making the workability of the epihalohydrin-based rubber composition good.

The epihalohydrin-based rubber used in the present invention can be obtained by ring-opening polymerization of each of the above monomers by a solution polymerization method or a solvent slurry polymerization method. The polymerization catalyst is not particularly limited as long as it is a catalyst for a general epihalohydrin-based rubber. As a polymerization catalyst, examples thereof include a catalyst obtained by reacting water and acetylacetone with organoaluminum (JP-B-35-15797), a catalyst obtained by reacting phosphoric acid and triethylamine with triisobutylaluminium (JP-B-46-27534), a catalyst obtained by reacting an organic acid salt of diazabicycloundecene and phosphoric acid with triisobutylaluminium (JP-B-56-51171), a catalyst composed of a portion hydrolyzed product of aluminum alkoxide and an organozinc compound (JP-B-43-2945), and a catalyst composed of an organozinc compound and a polyvalent alcohol (JP-B-45-7751), a catalyst composed of dialkylzinc and water (JP-B-36-3394), a catalyst composed of organotin compound (JP-A-2000-63656), and the like.

Examples of the polymerization solvent include aromatic hydrocarbons such as benzene and toluene; linear saturated hydrocarbons such as n-pentane and n-hexane; cyclic saturated hydrocarbons such as cyclopentane and cyclohexane; and the like. In addition, the polymerization reaction can be carried out by any method such as batch, semi-batch, or continuous, usually at 0 to 100°C, preferably 30 to 80°C.

When the epihalohydrin-based rubber used in the present invention is a copolymer, any copolymer type of copolymers obtained by block copolymerization and random copolymerization may be used, but in particular, when ethylene oxide is used for a monomer, the random copolymer is preferred from the viewpoint that the random copolymer can reduce the crystallinity of polyethylene oxide so as to hardly impair rubber elasticity.

### <Carbon Black>

In addition to the epihalohydrin-based rubber described above, the epihalohydrin-based rubber composition of the present invention contains a carbon black having an iodine adsorption amount of 100 mg/g or more and a nitrogen adsorption specific surface area of 95 to 150 m²/g.

The carbon black used in the present invention may have an iodine adsorption amount (IA) of 100 mg/g or more, preferably 100 to 160 mg/g, and more preferably 110 to 150 mg/g. The iodine adsorption amount can be an indicator of the particle diameter of the carbon black, and when the iodine adsorption amount of the carbon black is set within the above range, the obtained cross-linked rubber is excellent in tear strength and heat resistance. Note that, the iodine adsorption amount can be measured by a method according to JIS K6217-1:2008.

The carbon black used in the present invention has the nitrogen adsorption specific surface area (N₂SA) in the range of 95 to 150 m²/g in addition to the iodine adsorption amount (IA) in the above range, and the nitrogen adsorption specific surface area is preferably in the range of 100 to 145 m²/g, more preferably in the range of 110 to 145 m²/g. By setting the nitrogen adsorption specific surface area in the above range, the obtained cross-linked rubber can be made excellent balanced in tear strength, heat resistance, and compression set resistance. Note that, the nitrogen adsorption specific surface area can be measured by a method according to JIS K6217-2:2001.

As the carbon black used in the present invention, it is sufficient that the iodine adsorption amount and the nitrogen adsorption specific surface area fall within the above range, and the type thereof is not particularly limited, and may be any of furnace black, acetylene black, thermal black, channel black, austin black, graphite, and the like, and among these, furnace black is preferably used, and specific examples thereof include SAF, ISAF, ISAF-HS, ISAF-LS, IISAF-HS. These may be used alone or in combination of two or more thereof.

In the epihalohydrin-based rubber composition of the present invention, the content of the carbon black is preferably 1 to 100 parts by weight, more preferably 5 to 70 parts by weight, and still more preferably 10 to 50 parts by weight, with respect to 100 parts by weight of the epihalohydrin-based rubber. By setting the content of the carbon black in the above range, the obtained cross-linked rubber can be made more excellent in tear strength, heat resistance, compression set resistance, and creep resistance.

Incidentally, other carbon black in which at least one of the iodine adsorption amount or the nitrogen adsorption specific surface area is outside the above range (e.g., carbon black in which the iodine adsorption amount and/or the nitrogen adsorption specific surface area is outside the predetermined range of the present invention (that is, a range in which the iodine adsorption amount is 100 mg/g or more, and a range in which the nitrogen adsorption specific surface area is 95 to 150 m²/g)) may be used in combination within a range not inhibiting the effect of the present invention, but it is preferable that the content of such other carbon black is smaller than the content of the carbon black in which the iodine adsorption amount is 100 mg/g or more and the nitrogen adsorption specific surface area is 95 to 150 m²/g. As a specific content of such other carbon black, a range may be set to be smaller than the content of the carbon black in which the iodine adsorption amount is 100 mg/g or more and the nitrogen adsorption specific surface area is 95 to 150 m²/g, but is more preferably in an amount of 60 parts by weight or less, and still more preferably in an amount of 40 parts by weight or less, with respect to 100 parts by weight of the epihalohydrin-based rubber.

### <Quinoxaline-based cross-linking agent>

In addition to the epihalohydrin-based rubber and the carbon black described above, the epihalohydrin-based rubber composition of the present invention contains a quinoxaline-based cross-linking agent. The quinoxaline-based cross-linking agent used in the present invention is not particularly limited and may be any compound having a quinoxaline structure and acting as a cross-linking agent for the epihalohydrin-based rubber, and examples thereof include 2,3-dimercaptoquinoxaline, quinoxaline-2,3-dithiocarbonate, 6-methylquinoxaline-2,3-dithiocarbonate, and 5,8-dimethylquinoxaline-2,3-dithiocarbonate, and among these, 6-methylquinoxaline-2,3-dithiocarbonate is suitably used.

In the epihalohydrin-based rubber composition of the present invention, the content of the quinoxaline-based cross-linking agent may be 0.01 to 2 parts by weight, preferably 0.1 to 2 parts by weight, more preferably 0.5 to 1.8 parts by weight, and still more preferably 1.0 to 1.6 parts by weight, with respect to 100 parts by weight of the epihalohydrin-based rubber. By setting the content of the quinoxaline-based cross-linking agent in the above range, the obtained cross-linked rubber can have more excellent balance in tear strength, heat resistance, compression set resistance, and creep resistance, as well as adhesion with other rubber layer when laminated with other rubber layer.

### <Hydrotalcite compound>

The epihalohydrin-based rubber composition of the present invention contains a hydrotalcite compound in addition to the above-described epihalohydrin-based rubber, carbon black, and quinoxaline-based cross-linking agent.

According to the present invention, into the epihalohydrin-based rubber, in addition to the carbon black having the specific iodine adsorption amount and nitrogen adsorption specific surface area described above, and the quinoxaline-based cross-linking agent described above, by blending a hydrotalcite compound, the obtained cross-linked rubber can have excellent balance in tear strength, heat resistance, compression set resistance, and creep resistance, and can exhibit high adhesion when laminated with other rubber layer.

The hydrotalcite compound in the present invention acts primarily as an acid acceptor. As the hydrotalcite compound, a compound represented by the following general formula (1) is preferred.

MgₓZn_{y}Al_{z}(OH)_{2(x+y)+3z-2}CO₃·mH₂O (1)

(In the above general formula (1), x=1 to 10, y=0 to 9, x+y=1 to 10, z=1 to 5, "m" represents 0 or a positive real number.)

In the above general formula (1), from the viewpoint of obtaining the cross-linked rubber more excellent in heat resistance and compression set resistance, "x" is preferably x=2 to 8, more preferably x=2 to 6, "y" is preferably y=0 to 6, and more preferably y=0 to 4. Further, x+y is preferably x+y=2 to 8, more preferably x+y=3 to 6, and "z" is preferably z=1 to 3.

In addition, from the viewpoint of obtaining the cross-linked rubber more excellent in tear strength, heat resistance, and creep resistance, it is preferable that the hydrotalcite compound contains at least a zinc atom. For example, when the hydrotalcite compound used in the present invention is a hydrotalcite compound represented by the above general formula (1), a compound in which "x" is 1≤x<10 and "y" is 0<y≤9 in the general formula (1) is preferable, a compound in which "x" is x=1 to 9.9 and "y" is y=0.1 to 9 is more preferable, a compound in which "x" is x=2 to 7.7 and "y" is y=0.3 to 6 is still more preferable, and a compound in which "x" is x=2 to 5.3 and "y" is y=0.7 to 4 is further still more preferable. In this case, x+y, "z", and "m" may be in the above ranges.

When a compound containing no zinc atom is used as the hydrotalcite compound used in the present invention, for example, a compound represented by the following general formula (2) can be suitably used. By using the compound represented by the following general formula (2), the obtained cross-linked rubber can be made more excellent in compression set resistance.

MgₓAl_{z}(OH)_{2x+3z-2}CO₃·mH₂O (2)

(In the above general formula (2), x=1 to 10, z=1 to 5, "m" represents 0 or a positive real number.)

In the above general formula (2), from the viewpoint of obtaining the cross-linked rubber more excellent in heat resistance and compression set resistance, x=2 to 8 is preferred, x=3 to 6 is more preferred, and z=1 to 3 is preferred.

Further, the hydrotalcite compound may be a surface treated one. The surface treatment agent used for surface treatment of the hydrotalcite compound is not particularly limited, and examples thereof include a fatty acid, a silane coupling agent, a surfactant, and the like, and among them, a fatty acid is preferred because the dispersibility of the hydrotalcite compound in the epihalohydrin-based rubber composition can be increased and the blending effect can be further increased.

The nitrogen adsorption specific surface area (N₂SA) of the hydrotalcite compound is preferably 3 to 15 m²/g, more preferably 5 to 13 m²/g, still more preferably 5 to 12 m²/g, and particularly preferably 7 to 11 m²/g. By setting the nitrogen adsorption specific surface area of the hydrotalcite compound to be used within the above range, the obtained cross-linked rubber can be made more excellent in heat resistance and adhesiveness.

In the epihalohydrin-based rubber composition used in the present invention, the content of the hydrotalcite compound may be more than 3 parts by weight and less than 10 parts by weight with respect to 100 parts by weight of the epihalohydrin-based rubber, and the lower limit thereof is preferably 4 parts by weight or more, more preferably 5 parts by weight or more, still more preferably 6 parts by weight or more, and further still more preferably 7 parts by weight or more, and the upper limit thereof is preferably 9 parts by weight or less, more preferably 8 parts by weight or less. By setting the content of the hydrotalcite compound to the upper limit value of the above range or less, the obtained cross-linked rubber becomes excellent in the balance of the tear strength and the compression set resistance, and by setting the content of the hydrotalcite compound to the lower limit value of the above range or more, the obtained cross-linked rubber becomes excellent in the heat resistance and creep resistance, and further excellent in the adhesion with other rubber layer when the laminate is formed by laminating with other rubber layer.

### <Other compounding agent to be compounded into epihalohydrin-based rubber composition>

In addition to the above components, the epihalohydrin-based rubber composition of the present invention may further contain silica. Examples of the silica include dry process silica, wet process silica, colloidal silica, and precipitated silica.

In the epihalohydrin-based rubber composition of the present invention, the content of silica is preferably 1 to 80 parts by weight, more preferably 1 to 60 parts by weight, and still more preferably 1 to 40 parts by weight, with respect to 100 parts by weight of the epihalohydrin-based rubber. By setting the content of silica within the above range, it is possible to make the obtained cross-linked rubber more excellent in balance between tear strength and compression set resistance.

When silica is blended into the epihalohydrin-based rubber composition of the present invention, a silane coupling agent may be further blended in addition to each of the above components.

In the epihalohydrin-based rubber composition of the present invention, the content of the silane coupling agent is preferably 0.1 to 10 parts by weight, more preferably 0.2 to 7 parts by weight, and still more preferably 0.3 to 5 parts by weight, with respect to 100 parts by weight of the epihalohydrin-based rubber. By setting the content of the silane coupling agent within the above range, it is possible to make the obtained cross-linked rubber more excellent in compression set resistance and adhesion between the epihalohydrin-based rubber layer and the other rubber layer in the obtained rubber laminate.

In addition, in the epihalohydrin-based rubber composition of the present invention, rubbers such as natural rubber, polybutadiene rubber, polyisoprene rubber, acrylic rubber, styrene-butadiene rubber, acrylonitrile-butadiene rubber, and chloroprene rubber; thermoplastic elastomers such as olefin-based thermoplastic elastomers, styrene-based thermoplastic elastomers, vinyl chloride-based thermoplastic elastomers, polyester-based thermoplastic elastomers, polyamide-based thermoplastic elastomers, and polyurethane-based thermoplastic elastomers; resins such as polyvinyl chloride, coumarone resin, and phenolic resin; and the like may be blended. The blending amount of these rubbers, thermoplastic elastomers or resins is preferably 30 parts by weight or less, particularly preferably 10 parts by weight or less, with respect to 100 parts by weight of the epihalohydrin-based rubber.

Further, in addition to the above-described compounding agent, the epihalohydrin-based rubber composition of the present invention may contain other compounding agent which is usually blended into a known rubber. Such compounding agents are not particularly limited, and examples thereof include a plasticizer; a reinforcing agent; a cross-linking retarder; a cross-linking accelerator; an activator; a processing aid; an anti-aging agent; an ultraviolet absorber; a light-resistant stabilizer; a tackifier; a surfactant; a conductivity imparting agent; an electrolyte substance; a colorant (dye/pigment); a flame retardant; an antistatic agent; and the like.

The epihalohydrin-based rubber composition of the present invention can be prepared by blending and kneading the carbon black, the quinoxaline-based cross-linking agent, and the hydrotalcite compound, and various compounding agents used if necessary, into the epihalohydrin-based rubber by a desired method. For example, compounding agents excluding the quinoxaline-based cross-linking agent and the cross-linking accelerator used if necessary, and the epihalohydrin-based rubber are kneaded, and then the quinoxaline-based cross-linking agent and the cross-linking accelerator used if necessary are mixed into the mixture to obtain the epihalohydrin-based rubber composition. In blending and kneading, kneading may be performed using one or a combination of a plurality of arbitrary kneading and forming machines such as a kneader, Banbury, an open roll, a calender roll, and an extruder. The kneading temperature of the compounding agents excluding the quinoxaline-based cross-linking agent and the cross-linking accelerator used if necessary, and the epihalohydrin-based rubber is preferably 20 to 200°C, more preferably 20 to 150°C, and the kneading time thereof is preferably 30 seconds to 30 minutes, and the mixing temperature of the kneaded product and the quinoxaline-based cross-linking agent and the cross-linking accelerator is preferably 100°C or less, more preferably 0 to 80°C

### <Cross-linked rubber>

The cross-linked rubber of the present invention is obtained by cross-linking the epihalohydrin-based rubber composition of the present invention described above.

The method of cross-linking the epihalohydrin-based rubber composition to obtain the cross-linked rubber is not particularly limited, the cross-linking may be performed after preliminarily performing the forming, or alternatively, the forming and the cross-linking may also be performed simultaneously. The temperature at the time of forming is preferably 20 to 200°C, more preferably 40 to 180°C. The heating temperature at the time of cross-linking is preferably 130 to 200°C, more preferably 140 to 200°C. If the temperature at the time of cross-linking is too low, the cross-linking time may be required for a long time, or the cross-linking density of the obtained cross-linked rubber may become low. On the other hand, if the temperature at the time of cross-linking is too high, forming failure may occur. Although the cross-linking time varies depending on the cross-linking method, the cross-linking temperature, the shape, and the like, a range of 1 minute or more and 5 hours or less is preferable from the viewpoint of cross-linking density and production efficiency. As the heating method, methods such as press heating, oven heating, steam heating, hot air heating, and microwave heating may be appropriately selected.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking. In carrying out the secondary cross-linking, the heating temperature is preferably 100 to 220°C, more preferably 130 to 210°C. The heating time is preferably 30 minutes to 5 hours.

### <Rubber laminate>

The epihalohydrin-based rubber composition of the present invention may be used for, as an epihalohydrin-based rubber layer, obtaining a rubber laminate comprising an epihalohydrin-based rubber layer composed of the epihalohydrin-based rubber composition and other rubber layer by laminating with other rubber layer composed of other rubber composition.

Examples of the other rubber layer include a fluororubber layer formed of a fluororubber composition, a nitrile rubber layer formed of a nitrile rubber composition, and the like, and among them, a fluororubber layer is preferred from the viewpoint of adhesion to the epihalohydrin-based rubber layer. In other words, it is preferable to provide a rubber laminate having an epihalohydrin-based rubber layer (A) composed of the epihalohydrin-based rubber composition, and a fluororubber layer (B) composed of a fluororubber composition containing a fluororubber and a cross-linking agent.

Examples of the fluororubber constituting the fluororubber composition constituting the fluororubber layer (B) of the rubber laminate of the present invention include a homopolymer rubber of a fluorine-containing unsaturated monomer, a copolymer rubber of a fluorine-containing unsaturated monomer, or a copolymer rubber of a fluorine-containing unsaturated monomer and other monomer copolymerizable with a fluorine-containing unsaturated monomer. Example of the fluorine-containing unsaturated monomer for forming the fluororubber include vinylidene fluoride, hexafluoropropylene, tetrafluoroethylene, pentafluoropropylene, trifluoroethylene, trifluorochloroethylene, vinyl fluoride, perfluoromethyl vinyl ether, perfluoroethyl vinyl ether, and cross-linkable monomers such as brominated and/or iodinated unsaturated fluorohydrocarbons, and the like. Further, examples of other monomers copolymerizable with the fluorine-containing unsaturated monomer include ethylene, and propylene.

Specific examples of the fluororubber include a binary copolymer rubber such as a vinylidene fluoride-hexafluoropropylene copolymer, a tetrafluoroethylene-propylene copolymer, and a tetrafluoroethylene-perfluoromethylvinyl ether copolymer, and a ternary copolymer rubber such as a vinylidene fluoride-hexafluoropropylene-tetrafluoroethylene copolymer.

Further, the cross-linking agent is not particularly limited, and for example, a polyol-based cross-linking agent can be mentioned, and as the polyol-based cross-linking agent, a polyhydroxy compound is preferred from the viewpoint that the adhesive strength between the epihalohydrin-based rubber layer (A) and the fluororubber layer (B) can be further increased in the obtained rubber laminate, and a polyhydroxy aromatic compound is more preferred. In addition, as the cross-linking agent, one kind may be used or plurality kinds may be used in combination.

The polyhydroxy aromatic compound is not particularly limited, and may be, examples thereof include, 2,2-bis(4-hydroxyphenyl)propane (hereinafter referred to as "bisphenol A"), 2,2-bis(4-hydroxyphenyl)perfluoropropane (hereinafter referred to as "bisphenol AF"), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane, 4,4-bis(4-hydroxyphenyl)valeric acid, 2,2-bis(4-hydroxyphenyl)tetrafluoro dichloropropane, 4,4'-dihydroxydiphenyl sulfone, 4,4'-dihydroxydiphenyl ketone, tri(4-hydroxyphenyl)methane, 3,3',5,5'-tetrachlorobisphenol A, 3,3',5,5'-tetrabromobisphenol A, and the like. These polyhydroxy aromatic compounds may be an alkali metal salt thereof, an alkaline earth metal salt thereof, or the like.

In the fluororubber composition used in the present invention, the content of the cross-linking agent is preferably 0.2 to 10 parts by weight, more preferably 0.5 to 6 parts by weight, and still more preferably 1 to 4 parts by weight, with respect to 100 parts by weight of the fluororubber.

In addition, the fluororubber composition used in the present invention may contain other compounding agent which is usually blended into known rubbers in addition to the cross-linking agent. Such compounding agents are not particularly limited, and examples thereof include a plasticizer; a reinforcing agent; a cross-linking retarder; a cross-linking accelerator; an acid acceptor; an activator; a processing aid; an anti-aging agent; an ultraviolet absorber; a light-resistant stabilizer; a tackifier; a surfactant; a conductivity imparting agent; an electrolyte substance; a colorant (dye/pigment); a flame retardant; an antistatic agent; and the like.

The fluororubber composition used in the present invention can be prepared by blending and kneading the cross-linking agent and various compounding agents used if necessary into the fluororubber by a desired method. In blending and kneading, kneading may be performed using one or a combination of a plurality of arbitrary kneading and forming machines such as a kneader, Banbury, an open roll, a calender roll, and an extruder.

The rubber laminate of the present invention may be provided with an epihalohydrin-based rubber layer composed of the epihalohydrin-based rubber composition described above and other rubber layer, and is preferably provided with an epihalohydrin-based rubber layer (A) composed of the epihalohydrin-based rubber composition described above and a fluororubber layer (B) composed of the fluororubber composition. It is more preferable that the epihalohydrin-based rubber layer (A) is a layer composed of a cross-linked product of the epihalohydrin-based rubber composition and the fluororubber layer (B) is a layer composed of a cross-linked product of the fluororubber composition. Further, although there is no particular limitation on the lamination embodiment of the epihalohydrin-based rubber layer and the other rubber layer, it is preferable that these layers are bonding by cross-linking.

The rubber laminate of the present invention comprising the epihalohydrin-based rubber layer (A) and the fluororubber layer (B) can be manufactured by, for example, the following method. That is, first, each of the above-described epihalohydrin-based rubber composition and the fluororubber composition is separately formed into a sheet (a sheet of the epihalohydrin-based rubber layer (A), a sheet of the fluororubber layer (B)) having an arbitrary area with thickness of preferably 0.1 to 5 mm, more preferably 0.5 to 3 mm, by a known method such as press forming, roll forming, or extrusion molding in an uncross-linked state. Then, each of the obtained sheets is brought into contact with each other and is subjected to pressure heating cross-linking using a hot press or a vulcanization pan to be bonded, thereby obtaining the rubber laminate of the present invention.

Alternatively, a method may be employed in which the above-described epihalohydrin-based rubber composition and the fluororubber composition are formed into a laminated tube shape in an uncross-linked state by a layered extrusion method, and then subjected to pressure heating cross-linking using a vulcanization pan to be bonded.

Hot pressing is usually carried out at temperatures of 140 to 200°C for 5 to 60 minutes at pressure of 0.2 to 15 MPa. When using vulcanization pan, it is usually carried out at temperatures of 130 to 160°C for 30 to 120 minutes under pressure of 0.18 MPa or less.

The obtained rubber laminate may be further subjected to heat treatment (post cure).

The rubber laminate of the present invention is not limited to a form in which the epihalohydrin-based rubber layer (A) and the fluororubber layer (B) are laminated one by one, and one or both of them may be formed in a plurality of layers as long as they include portions in which these layers are laminated with each other. Further, it may have other layers made of other materials. Such other materials may be selected depending on the required characteristics, the intended use, and the like, and appropriates thereof include acrylic rubber, acrylonitrile-butadiene rubber, blend rubber of acrylonitrile-butadiene rubber and polyvinyl chloride, and chlorosulfonated polyethylene rubber.

As described above, according to the present invention, there can be provided an epihalohydrin rubber composition capable of providing a cross-linked rubber which has an excellent balance in tear strength, heat resistance, compression set resistance, and creep resistance and exhibits high adhesion when laminated with other rubber layer. Further, according to the present invention, there can be provided a cross-linked rubber and a rubber laminate obtained using such an epihalohydrin-based rubber composition. Then, the cross-linked rubber and the rubber laminate of the present invention are obtained by using the epihalohydrin-based rubber composition of the present invention, and thus, the cross-linked rubber and the rubber laminate of the present invention are provided with each of the properties described above, and by taking advantage of such characteristics, for example, in a wide range of fields such as transportation machinery such as automobiles, general equipment, and electrical equipment, it is useful as a sealing material such as an O-ring, a gasket, a packing, an oil seal, a bearing seal, or the like; hoses such as an oil tube, a fuel hose, an air hose, a turbo air hose, a PCV hose, and an inlet hose; industrial belts such as a transfer belt, and an endless belt; a cushioning material, an anti-vibration material; an electric wire covering material; a sheet; a boot; a dust cover; and the like. Among these, the rubber laminate of the present invention can be particularly suitably used for hose applications, especially fuel hose applications.

### EXAMPLES

The present invention will now be more specifically described by way of Examples and Comparative Examples. In Examples, "parts" are expressed in terms of weight, unless otherwise specified.

A variety of physical properties were evaluated according to the following methods.

### [Mooney viscosity of epihalohydrin rubber]

Mooney viscosity (ML1+4, 100°C) was measured according to JIS K6300 at 100°C.

### [Normal physical properties (hardness, tensile strength, elongation at break) and tear strength of cross-linked product of epihalohydrin-based rubber]

The epihalohydrin-based rubber composition was placed in a mold having a length of 15 cm, a width of 15 cm, and a depth of 0.2 cm, and press-molded at 160°C for 30 minutes under a press pressure of 10 MPa to obtain a sheet-shaped primary cross-linked product. The resulting primary cross-linked product was then transferred to a geer type oven and secondary cross-linked at 150°C for 4 hours to obtain a sheet-shaped cross-linked rubber. Then, a test piece was produced by punching out the obtained sheet-shaped cross-linked rubber with a No. 3 dumbbell, and the tensile strength and elongation at break of the cross-linked rubber were measured according to JIS K6251 using the obtained test piece, and the hardness of the cross-linked rubber was measured using a durometer hardness tester (type A) according to JIS K6253. Also, according to test method A of JIS K6252-1:2015, the test piece was prepared by punching with a punching die for trouser-shaped specimen and the tear strength was measured.

### [Heat aging test of cross-linked product of epihalohydrin-based rubber]

A heat aging test was conducted on a test piece obtained in the same manner as the measurement of the above-mentioned normal physical properties (a test piece obtained by punching out a sheet-shaped cross-linked rubber with a No. 3 dumbbell). The heat aging test was conducted according to JIS K6257 (2010) at 150°C for 168 hours, and the hardness, tensile strength, and elongation at break after the heat aging test were measured.

### [Compression set test of cross-linked product of epihalohydrin-based rubber]

Using a mold, the epihalohydrin-based rubber composition was cross-linked by pressing at a temperature of 160°C for 30 minutes to obtain a cylindrical primary cross-linked product having a diameter of 29 mm and a height of 12.5 mm. The resulting primary cross-linked product was then subjected to secondary cross-linking in a geer type oven by further heating at 150°C for 4 hours to obtain a cylindrical test piece. Then, using the obtained test piece, according to JIS K6262, after placing the obtained test piece in a state of being compressed by 25% for 22 hours under an environment of 135°C, a compression set was measured. The smaller this value, the better the compression set resistance.

### [Creep test of cross-linked product of epihalohydrin-based rubber]

A creep test was performed on a test piece obtained by punching out a sheet-shaped cross-linked rubber with a No. 3 dumbbell in the same manner as the measurement of the normal physical properties. In the creep test, according to JIS K6273:2006, the creep rate (%) at a constant tensile stresses of 2.5 MPa at 100°C was measured. The smaller this value, the better the creep resistance.

### [Peeling test of rubber laminate]

The rubber laminate was used to evaluate the adhesion between both layers constituting the rubber laminate by performing a peel test according to JIS K6256. Specifically, the obtained rubber laminate was punched out in a strip shape having a width of 25.4 mm and a length of 100 mm, both ends of the rubber laminate were grasped by air chucks of a tensile tester, 180° peel test was performed at a speed of 50 mm/min, and a load at the time of peel was read by a load cell of the tensile tester, and the peel strength T_{F} (N/mm) of the rubber laminate was determined. It can be judged that the higher the peel strength, the better the adhesion property.

### [Production Example 1, production of polymerization catalyst]

The sealed pressure-resistant glass vessel was nitrogen-substituted to supply 200 parts of toluene and 60 parts of triisobutylaluminium. After this, the glass vessel was immersed in ice water and cooled, 230 parts of diethyl ether was added and stirred. Next, 13.6 parts of phosphoric acid was added while cooling with ice water, and the mixture was further stirred. At this time, due to the reaction of triisobutylaluminium and phosphoric acid, the internal pressure of the vessel increases, and thus, a timely decompression was performed. Then, the obtained reaction mixture was subjected to an aging reaction in a hot water bath at 60°C for 1 hour to obtain a catalyst solution.

### [Production Example 2, production of epichlorohydrin rubber]

To an autoclave, 265.2 parts of epichlorohydrin, 13.0 parts of allyl glycidyl ether, 9.76 parts of ethylene oxide, and 3250 parts of toluene were charged, and the temperature of the internal solution was raised to 60°C while stirring under a nitrogen atmosphere, and 8 parts of the catalyst solution obtained above was added to start the reaction. Next, from the start of the reaction, a solution obtained by dissolving 60.91 parts of ethylene oxide in 300 parts of toluene was continuously added at an equal rate over a period of 5 hours. Further, 7 parts of each of the catalyst solutions was added for 5 hours every 30 minutes after the start of the reaction. Then, 15 parts of water was added and stirred to terminate the reaction. To this was further added 45 parts of a 5 wt% toluene solution of 4,4'-thiobis-(6-tert-butyl-3-methylphenol) as an anti-aging agent and stirred. Then, steam stripping was carried out to remove toluene, and after removing the supernatant liquid, the mixture was dried under vacuum at 60°C, thereby obtaining 349 parts of epichlorohydrin rubber. As a result of measuring the monomer composition ratio of this epichlorohydrin rubber by ¹H-NMR, it was 62.5 mol% of epichlorohydrin monomer unit, 35 mol% of ethylene oxide monomer unit, and 2.5 mol% of allyl glycidyl ether monomer unit. Further, the Mooney viscosity of the obtained epichlorohydrin rubber was 69.

### [Example 1]

### [Preparation of epihalohydrin-based rubber composition]

To an open roll of 40°C, 100 parts of epichlorohydrin rubber obtained in Production Example 2 was charged, and then 40 parts of ISAF carbon black (product name "Seast 6", manufactured by Tokai Carbon Co., Ltd., iodine adsorption amount: 121 mg/g, nitrogen adsorption specific surface area: 119 m²/g), 5 parts of polyether ester-based plasticizer (product name "ADK Ciser RS735", manufactured by ADEKA Corporation), 3 parts of ester-based wax (product name "Splender R300", manufactured by Kao Corporation), 9 parts of hydrotalcite (I) (product name "DHT-4A", manufactured by Kyowa Chemical Industry Co., Ltd., acid acceptor, composition formula: Mg_{4.3}Al₂(OH)_{12.6}CO₃·3.3H₂O, nitrogen adsorption specific surface area: 10.1 m²/g, surface treated product with fatty acid), 0.5 parts of 2-mercaptobenzimidazole (product name "Nocrac MB", manufactured by Ouchi Shinko Chemical Industry Co., Ltd., anti-aging agent), 1 part of 4,4'-di-(α,α-dimethylbenzyl)diphenylamine (product name "Nocrac CD", manufactured by Ouchi Shinko Chemical Industry Co., Ltd.), 1 part of copper dimethyldithiocarbamate (product name "Nocceler TTCU", manufactured by Ouchi Shinko Chemical Industry Co., Ltd., anti-aging agent), 1 part of N-(cyclohexylthio)phthalimide (product name "RETARDER CTP", manufactured by Ouchi Shinko Chemical Industry Co., Ltd., cross-linking retarder), 1 part of phenolic salt of 1,8-diazabicyclo[5.4.0]undec-7-ene (DBU) (product name "U-CAT SA831", manufactured by San-Apro Ltd., DBU content of 42 wt%, cross-linking accelerator), and 1.2 parts of 6-methylquinoxaline-2,3-dithiocarbonate (quinoxaline-based cross-linking agent) were charged and were kneading and mixing for 10 minutes so as to obtain an epihalohydrin-based rubber composition.

Then, the obtained epihalohydrin-based rubber composition was used, the measurement and evaluation for normal physical properties (hardness, tensile strength, elongation at break), tear strength, heat aging test, compression set, and creep rate were conducted. The results are shown in Table 1.

### [Preparation of fluororubber composition]

To 100 parts of fluororubber containing a polyol-based cross-linking agent (product name "VITON A-401C", manufactured by The Chemours Company, fluororubber containing bisphenol AF as a polyol-based cross-linking agent), 30 parts of MT carbon black (product name "Thermax (registered trademark) N990", manufactured by Cancarb Limited, filler), 3 parts of magnesium oxide (product name "Kyowa Mag 150", manufactured by Kyowa Chemical Industry Co., Ltd., acid acceptor), and 6 parts of calcium hydroxide (product name "Caldic #1000", manufactured by Ohmi Chemical Industry Co., Ltd., acid acceptor) were added, and the mixture was kneaded by an open roll to obtain a fluororubber composition.

### [Structure of rubber laminate]

The epihalohydrin-based rubber composition and the fluororubber composition obtained above were kneaded by an open roll, respectively, and divided into a sheet having a uniform thickness of about 2 mm, and formed into 6 cm×10 cm square to obtain sheet-shaped articles. Then, the obtained sheet-shaped articles were bonded together, and placed in a mold having a length of 6 cm, a width of 10 cm, and a depth of 0.4 cm, and bonded by cross-linking at 160°C for 30 minutes while pressed under a press pressure of 50 kg/cm², and further subjected to secondary cross-linking (secondary cross-linking condition: 150°C, 4 hours), thereby producing a rubber laminate. In this time, in order to perform the above-described peeling test, the cellophane paper was sandwiched in advance between the portions gripped by the air chuck at the time of the peeling test, thereby forming the portions where both sheets were not bonded. Then, the obtained rubber laminate was subjected to a peel test according to the above method. The results are shown in Table 1.

### [Examples 2 to 6]

Epihalohydrin rubber compositions, fluororubber compositions, and rubber laminates were obtained and evaluated in the same manner as in Example 1 except that the amount of hydrotalcite (I) (product name "DHT-4A") used was changed from 9 parts to 8 parts (Example 2), 7 parts (Example 3), 6 parts (Example 4), 5 parts (Example 5), and 4 parts (Example 6), respectively. The results are shown in Table 1.

### [Example 7]

In place of 40 parts of ISAF carbon black (product name "Seast 6", manufactured by Tokai Carbon Co., Ltd., iodine adsorption amount: 121 mg/g, nitrogen adsorption specific surface area: 119 m²/g), 40 parts of SAF carbon black (product name "Seast 9H", manufactured by Tokai Carbon Co., Ltd., iodine adsorption amount: 139 mg/g, nitrogen adsorption specific surface area: 142 m²/g) was used. Except this, in the same manner as in Example 2, an epihalohydrin-based rubber composition, a fluororubber composition, and a rubber laminate were obtained, and evaluation in the same manner. The results are shown in Table 1.

### [Example 8]

An epihalohydrin rubber composition, a fluororubber composition, and a rubber laminate were obtained as in Example 1, except that 8 parts of hydrotalcite (II) (product name "ZHT-4A", Kyowa Chemical Industry Co., Ltd., acid acceptor, composition formula: Mg₃ZnAl₂(OH)₁₂CO₃·3.0H₂O, nitrogen adsorption specific surface area: 7 m²/g) was used instead of 9 parts of hydrotalcite (I) (product name "DHT-4A"), and evaluation was performed in the same manner. The results are shown in Table 1.

### [Examples 9 to 10]

Epihalohydrin-based rubber compositions, fluororubber compositions, and rubber laminates were obtained in the same manner as in Example 8, except that the amount of hydrotalcite (II) (product name "ZHT-4A") used was changed from 8 parts to 7 parts (Example 9), and 6 parts (Example 10), respectively, and evaluation was performed in the same manner. The results are shown in Table 1.

### [Comparative Example 1]

An epihalohydrin-based rubber composition, a fluororubber composition, and a rubber laminate were obtained in the same manner as in Example 1, except that the amount of hydrotalcite (I) (product name "DHT-4A") used was changed from 9 parts to 10 parts, and evaluation was performed in the same manner. The results are shown in Table 2.

### [Comparative Example 2]

An epihalohydrin-based rubber composition, a fluororubber composition, and a rubber laminate were obtained in the same manner as in Example 1, except that the amount of hydrotalcite (I) (product name "DHT-4A") used was changed from 9 parts to 3 parts, and evaluation was performed in the same manner. The results are shown in Table 2.

### [Comparative Example 3]

An epihalohydrin-based rubber composition, a fluororubber composition, and a rubber laminate were obtained in the same manner as in Example 1, except that 8 parts of aluminum hydroxide (product name "Kyoward 200", manufactured by Kyowa Chemical Industry Co., Ltd., acid acceptor) was used instead of 9 parts of hydrotalcite (I) (product name "DHT-4A"), and evaluation was performed in the same manner. The results are shown in Table 2.

### [Comparative Example 4]

In place of 40 parts of ISAF carbon black (product name "Seast 6", manufactured by Tokai Carbon Co., Ltd., iodine adsorption amount: 121 mg/g, nitrogen adsorption specific surface area: 119 m²/g), 40 parts of HAF carbon black (product name "Seast 3", manufactured by Tokai Carbon Co., Ltd., iodine adsorption amount: 80mg/g, nitrogen adsorption specific surface area: 79 m²/g) was used. Except this, in the same manner as in Example 2, an epihalohydrin-based rubber composition, a fluororubber composition, and a rubber laminate were obtained, and evaluation was performed in the same manner. The results are shown in Table 2.

### [Comparative Example 5]

In place of 40 parts of ISAF carbon black (product name "Seast 6", manufactured by Tokai Carbon Co., Ltd., iodine adsorption amount: 121 mg/g, nitrogen adsorption specific surface area: 119 m²/g), 40 parts of FEF carbon black (product name "Seast SO", manufactured by Tokai Carbon Co., Ltd., iodine adsorption amount: 44 mg/g, nitrogen adsorption specific surface area: 42 m²/g) was used. Except this, in the same manner as in Example 2, an epihalohydrin-based rubber composition, a fluororubber composition, and a rubber laminate were obtained, and evaluation was performed in the same manner. The results are shown in Table 2.

### [Comparative Example 6]

An epihalohydrin-based rubber composition, a fluororubber composition, and a rubber laminate were obtained in the same manner as in Example 2, except that the amount of 6-methylquinoxaline-2,3-dithiocarbonate (quinoxaline-based cross-linking agent) was changed from 1.2 parts to 3 parts, and evaluation was performed in the same manner. The results are shown in Table 2.

### [Comparative Example 7]

In place of 1.2 parts of 6-methylquinoxaline-2,3-dithiocarbonate (quinoxaline-based cross-linking agent), 1.1 parts of 2-imidazoline-2-thiol (product name "Sanceler 22-C", manufactured by Sanshin Chemical Industry Co., Ltd., thiourea-based cross-linking agent) and 1 part of tetrabutylphosphonium benzotriazolate (product name "ZEONET PB", manufactured by Zeon Corporation, phosphonium salt) were used. Except this, in the same manner as in Example 2, an epihalohydrin-based rubber composition, a fluororubber composition, and a rubber laminate were obtained, and evaluation was performed in the same manner. The results are shown in Table 2.

### Table 1

**Table 1**

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| **Composition of epihalohydrin-based rubber composition** | | | | | | | | | | | | | |
| | Epichlorohydrin rubber | | (parts) | 100 | 100 | 100 | 100 | 100 | 100 | 100 | 100 | 100 | 100 |
| | ISAF carbon black (iodine adsorption amount : 121 mg/g, nitrogen adsorption specific surface area 119 m ²/g) | | (parts) | 40 | 40 | 40 | 40 | 40 | 40 | | 40 | 40 | 40 |
| | SAF carbon black (iodine adsorption amount: 139 mg/g, nitrogen adsorption specific surface area: 142 m ²/g) | | (parts) | | | | | | | 40 | | | |
| | HAF carbon black (iodine adsorption amount: 80 mg/g, nitrogen adsorption specific surface area 79 m ²/g) | | (parts) | | | | | | | | | | |
| | FEF carbon black (iodine adsorption amount 44 mg/g, nitrogen adsorption specific surface area: 42 m ²/g) | | (parts) | | | | | | | | | | |
| | Polyether ester-based plasticizer | | (parts) | 5 | 5 | 5 | 5 | 5 | 5 | 5 | 5 | 5 | 5 |
| | Ester-based wax (processing aid) | | (parts) | 3 | 3 | 3 | 3 | 3 | 3 | 3 | 3 | 3 | 3 |
| | hydrotalcite (I) (acid acceptor) | | (parts) | 9 | 8 | 7 | 6 | 5 | 4 | 8 | | | |
| | hydrotalcite (II) (acid acceptor) | | (parts) | | | | | | | | 8 | 7 | 6 |
| | Aluminum hydroxide (acid acceptor) | | (parts) | | | | | | | | | | |
| | 2-mercaptobenzimidazole (anti-aging agent) | | (parts) | 0 5 | 05 | 0.5 | 0.5 | 0.5 | 0.5 | 05 | 0.5 | 05 | 0.5 |
| | 4,4'-di-(α,α-dimethylbenzyl)diphenylamine (anti-aging agent) | | (parts) | 1 | 1 | 1 | 1 | 1 | 1 | 1 | 1 | 1 | 1 |
| | Copper dimethyldithiocarbamate (anti-aging agent) | | (parts) | 1 | 1 | 1 | 1 | 1 | 1 | 1 | 1 | 1 | 1 |
| | N-(cyclohexylthio)phthalimide (cross-linking retarder) | | (parts) | 1 | 1 | 1 | 1 | 1 | 1 | 1 | 1 | 1 | 1 |
| | 1,8-diazabicyclo[5.4.0]undec-7-ene (cross-linking accelerator) | | (parts) | 1 | 1 | 1 | 1 | 1 | 1 | 1 | 1 | 1 | 1 |
| | 6-methylquinoxaline-2,3-dithiocarbonate (quinoxaline-based cross-linking agent) | | (parts) | 1.2 | 1.2 | 1.2 | 12 | 12 | 12 | 12 | 1.2 | 12 | 1.2 |
| | 2-imidazoline-2-thiol (thiourea-based cross-linking agent) | | (parts) | | | | | | | | | | |
| | Tetrabutylphosphonium benzotriazolate (phosphonium salt) | | (parts) | | | | | | | | | | |

| **Monomer composition of epichlorohydrin rubber** | | | | | | | | | | | | | |
|---|---|---|---|---|---|---|---|---|---|---|---|---|---|
| | Epichlorohydrin monomer unit | | (mol%) | 62.5 | 62 5 | 62.5 | 62 5 | 62 5 | 62 5 | 62 5 | 62.5 | 62 5 | 62.5 |
| | Ethylene oxide monomer unit | | (mol%) | 35 | 35 | 35 | 35 | 35 | 35 | 35 | 35 | 35 | 35 |
| | Allyl glycidyl ether monomer unit | | (mol%) | 2 5 | 25 | 2.5 | 2.5 | 2.5 | 2.5 | 25 | 2.5 | 25 | 25 |

| **Evaluation of cross-linked product of epihalohydrin-based rubber** | | | | | | | | | | | | | |
|---|---|---|---|---|---|---|---|---|---|---|---|---|---|
| | Normal physical properties | | | | | | | | | | | | |
| | | Hardness | | 76 | 77 | 75 | 76 | 75 | 74 | 76 | 74 | 75 | 74 |
| | | Tensile strength (MPa) | | 216 | 214 | 211 | 222 | 219 | 22.7 | 22.9 | 21 8 | 22.3 | 22 1 |
| | | Elongation at break (%) | | 470 | 480 | 450 | 490 | 520 | 560 | 550 | 470 | 490 | 500 |
| | | Tear strength (N/mm) | | 7 14 | 7.05 | 7 39 | 7.44 | 7.58 | 793 | 8.26 | 9 11 | 11.58 | 8.39 |
| | Heat aging resistant property | | | | | | | | | | | | |
| | | Hardness after heat aging test | | 82 | 83 | 82 | 81 | 81 | 80 | 84 | 79 | 80 | 79 |
| | | Tensile strength after heat aging test (MPa) | | 961 | 902 | 8.5 | 7 95 | 7.62 | 6 84 | 8.55 | 136 | 127 | 12.1 |
| | | Elongation at break after heat aging test (%) | | 130 | 130 | 130 | 130 | 130 | 110 | 120 | 160 | 160 | 160 |
| | Compression set test | | | | | | | | | | | | |
| | | Compression set (%) | | 43 | 39 | 38 | 35 | 32 | 31 | 44 | 45 | 40 | 37 |
| | Creep test | | | | | | | | | | | | |
| | | Creep rate (%) | | 441 | 457 | 473 | 528 | 599 | 714 | 462 | 422 | 443 | 470 |

| **Evaluation of rubber laminate** | | | | | | | | | | | | | |
|---|---|---|---|---|---|---|---|---|---|---|---|---|---|
| | Peeling test | | | | | | | | | | | | |
| | | Peel strength (N/mm) | | 2.49 | 2.31 | 2.98 | 2.66 | 2.50 | 2.02 | 2.90 | 2.63 | 2.75 | 2.43 |

### Table 2

**Table 2**

| | | | | Comparative Example | | | | | | |
|---|---|---|---|---|---|---|---|---|---|---|
| | | | | 1 | 2 | 3 | 4 | 5 | 6 | 7 |
| **Composition of epihalohydrin-based rubber composition** | | | | | | | | | | |
| | Epichlorohydrin rubber | | (parts) | 100 | 100 | 100 | 100 | 100 | 100 | 100 |
| | ISAF carbon black (iodine adsorption amount: 121 mg/g, nitrogen adsorption specific surface area: 119 m²/g) | | (parts) | 40 | 40 | 40 | | | 40 | |
| | SAF carbon black (iodine adsorption amount: 139 mg/g, nitrogen adsorption specific surface area: 142 m²/g) | | (parts) | | | | | | | 40 |
| | HAF carbon black (iodine adsorption amount: 80 mg/g, nitrogen adsorption specific surface area: 79 m ²/g) | | (parts) | | | | 40 | | | |
| | FEF carbon black (iodine adsorption amount: 44 mg/g, nitrogen adsorption specific surface area: 42 m ²/g) | | (parts) | | | | | 40 | | |
| | Polyether ester-based plasticizer | | (parts) | 5 | 5 | 5 | 5 | 5 | 5 | 5 |
| | Ester-based wax (processing aid) | | (parts) | 3 | 3 | 3 | 3 | 3 | 3 | 3 |
| | hydrotalcite (I) (acid acceptor) | | (parts) | 10 | 3 | | 8 | 8 | 8 | 8 |
| | hydrotalcite (II) (acid acceptor) | | (parts) | | | | | | | |
| | Aluminum hydroxide (acid acceptor) | | (parts) | | | 8 | | | | |
| | 2-mercaptobenzimidazole (anti-aging agent) | | (parts) | 0.5 | 0.5 | 0.5 | 0.5 | 0.5 | 0.5 | 0.5 |
| | 4, 4'-di-(α,α-dimethylbenzyljdiphenylamine (anti-aging agent) | | (parts) | 1 | 1 | 1 | 1 | 1 | 1 | 1 |
| | Copper dimethyldithiocarbamate (anti-aging agent) | | (parts) | 1 | 1 | 1 | 1 | 1 | 1 | 1 |
| | N-(cyclohexylthio)phthalimide (cross-linking retarder) | | (parts) | 1 | 1 | 1 | 1 | 1 | 1 | 1 |
| | 1,8-diazabicyclo[5.4.0]undec-7-ene (cross-linking accelerator) | | (parts) | 1 | 1 | 1 | 1 | 1 | 1 | 1 |
| | 6-methylquinoxaline-2,3-dithiocarbonate (quinoxaline-based cross-linking agent) | | (parts) | 12 | 12 | 12 | 12 | 12 | 3 | |
| | 2-imidazoline-2-thiol (thiourea-based cross-linking agent) | | (parts) | | | | | | | 11 |
| | Tetrabutylphosphonium benzotriazolate (phosphonium salt) | | (parts) | | | | | | | 1 |

| **Monomer composition of epichlorohydrin rubber** | | | | | | | | | | |
|---|---|---|---|---|---|---|---|---|---|---|
| | Epichlorohydrin monomer unit | | (mol%) | 62.5 | 62.5 | 62.5 | 62 5 | 62.5 | 62.5 | 62.5 |
| | Ethylene oxide monomer unit | | (mol%) | 35 | 35 | 35 | 35 | 35 | 35 | 35 |
| | Allyl glycidyl ether monomer unit | | (mol%) | 25 | 2.5 | 25 | 25 | 2.5 | 2.5 | 2.5 |

| **Evaluation of cross-linked product of epihalohydrin-based rubber** | | | | | | | | | | |
|---|---|---|---|---|---|---|---|---|---|---|
| | Normal physical properties | | | | | | | | | |
| | | Hardness | | 78 | 74 | 75 | 75 | 71 | 77 | 70 |
| | | Tensile strength (MPa) | | 20.3 | 22.8 | 19 1 | 18.2 | 15.3 | 19.8 | 174 |
| | | Elongation at break (%) | | 470 | 600 | 540 | 340 | 280 | 430 | 520 |
| | | Tear strength (N/mm) | | 7.21 | 8.3 | 7 51 | 3.89 | 2.84 | 6 87 | 6.72 |
| | Heat aging resistant property | | | | | | | | | |
| | | Hardness after heat aging test | | 83 | 79 | 82 | 79 | 74 | 84 | 53 |
| | | Tensile strength after heat aging test (MPa) | | 11 3 | 5.97 | 4 67 | 822 | 6 32 | 107 | 167 |
| | | Elongation at break after heat aging test (%) | | 140 | 100 | 100 | 120 | 110 | 100 | 90 |
| | Compression set test | | | | | | | | | |
| | | Compression set (%) | | 53 | 31 | 46 | 35 | 29 | 35 | 100 |
| | Creep test | | | | | | | | | |
| | | Creep rate (%) | | 424 | 836 | 633 | 505 | 593 | 436 | 724 |

| **Evaluation of rubber laminate** | | | | | | | | | | |
|---|---|---|---|---|---|---|---|---|---|---|
| | Peeling test | | | | | | | | | |
| | | Peel strength (N/mm) | | 3.47 | 1.88 | 1.70 | 2.31 | 2.12 | 1.02 | 2.59 |

As shown in Table 1 and Table 2, according to an epihalohydrin-based rubber composition comprising an epihalohydrin-based rubber, a carbon black, a quinoxaline-based cross-linking agent, and a hydrotalcite compound, wherein the carbon black has an iodine adsorption amount of 100 mg/g or more and a nitrogen adsorption specific surface area of 95 to 150 m²/g, a content of the quinoxaline-based cross-linking agent is 0.01 to 2 parts by weight with respect to 100 parts by weight of the epihalohydrin-based rubber, and a content of the hydrotalcite compound is more than 3 parts by weight and less than 10 parts by weight with respect to 100 parts by weight of the epihalohydrin-based rubber, a cross-linked rubber which has an excellent balance in tear strength, heat resistance, compression set resistance, and creep resistance and exhibits high adhesion when laminated with other rubber layer can be obtained (Examples 1 to 10).

On the other hand, when the content of the hydrotalcite compound in the epihalohydrin-based rubber composition was 10 parts by weight or more, the obtained cross-linked rubber was high in hardness, low in tensile strength, and high in compression set (Comparative Example 1).

When the content of the hydrotalcite compound in the epihalohydrin-based rubber composition was 3 parts by weight or less, the obtained cross-linked rubber was inferior in creep resistance, low in tensile strength and elongation at break after heat resistance test, inferior in heat resistance, and inferior in adhesion between the epihalohydrin-based rubber layer (A) and the fluororubber layer (B) (Comparative Example 2) .

When an acid acceptor other than the hydrotalcite compound was contained in the epihalohydrin-based rubber composition, the obtained cross-linked rubber was low in tensile strength, low in tensile strength and elongation at break after heat resistance test, inferior in heat resistance, and inferior in adhesion between the epihalohydrin-based rubber layer (A) and the fluororubber layer (B) (Comparative Example 3) .

When carbon black having an iodine adsorption amount of less than 100 mg/g and a nitrogen adsorption specific surface area of less than 95 m²/g was contained in the epihalohydrin-based rubber composition, the obtained cross-linked rubber was low in tensile strength, elongation at break, and tear strength (Comparative Examples 4, 5).

When the content of the quinoxaline-based cross-linking agent in the epihalohydrin-based rubber composition was more than 2 parts by weight, the obtained cross-linked rubber was low in tensile strength, elongation at break, and tear strength, low in elongation at break after heat resistance test, inferior in heat resistance, and inferior in adhesion between the epihalohydrin-based rubber layer (A) and the fluororubber layer (B) (Comparative Example 6).

When a cross-linking agent other than the quinoxaline-based cross-linking agent was contained in the epihalohydrin-based rubber composition, the obtained cross-linked rubber was low in tensile strength and tear strength, low in elongation at break and tensile strength after heat resistance test, inferior in heat resistance, and high in compression set (Comparative Example 7).

## Claims

1. An epihalohydrin-based rubber composition comprising an epihalohydrin-based rubber, a carbon black, a quinoxaline-based cross-linking agent, and a hydrotalcite compound, wherein
the carbon black has an iodine adsorption amount of 100 mg/g or more and a nitrogen adsorption specific surface area of 95 to 150 m²/g,
a content of the quinoxaline-based cross-linking agent is 0.01 to 2 parts by weight with respect to 100 parts by weight of the epihalohydrin-based rubber, and
a content of the hydrotalcite compound is more than 3 parts by weight and less than 10 parts by weight with respect to 100 parts by weight of the epihalohydrin-based rubber, wherein the iodine adsorption amount and the nitrogen adsorption specific surface area are measured as indicated in the description.

2. The epihalohydrin-based rubber composition according to claim 1, wherein the iodine adsorption amount of the carbon black is 110 to 150 mg/g.

3. The epihalohydrin-based rubber composition according to claim 1 or 2, wherein the nitrogen adsorption specific surface area of the carbon black is 110 to 145 m²/g.

4. The epihalohydrin-based rubber composition according to any one of claims 1 to 3, wherein the hydrotalcite compound is a compound represented by a following general formula (1):
MgₓZn_{y}Al_{z}(OH)_{2(x+y)+3z-2}CO₃·mH₂O (1)
where, in the above general formula (1), x=1 to 10, y=0 to 9, x+y=1 to 10, z=1 to 5, "m" represents 0 or a positive real number.

5. A cross-linked rubber obtained by cross-linking the epihalohydrin-based rubber composition according to any one of claims 1 to 4.

6. A rubber laminate comprising
an epihalohydrin-based rubber layer (A) composed of the epihalohydrin-based rubber composition according to any one of claims 1 to 4, and
a fluororubber layer (B) composed of a fluororubber composition comprising a fluororubber and a cross-linking agent.

7. The rubber laminate according to claim 6, wherein the epihalohydrin-based rubber layer (A) is a layer formed of a cross-linked product of the epihalohydrin-based rubber composition, and the fluororubber layer (B) is a layer formed of a cross-linked product of the fluororubber composition.

8. A hose obtained using the rubber laminate of claim 7.

## Patentansprüche

1. Kautschukzusammensetzung auf Epihalohydrinbasis, umfassend einen Kautschuk auf Epihalohydrinbasis, einen Ruß, ein Vernetzungsmittel auf Chinoxalinbasis und eine Hydrotalcitverbindung, wobei der Ruß eine Jodadsorptionsmenge von 100 mg/g oder mehr und eine spezifische Oberfläche nach Stickstoffadsorption von 95 bis 150 m² /g aufweist,
ein Gehalt des Vernetzungsmittels auf Chinoxalinbasis 0,01 bis 2 Gewichtsteile, bezogen auf 100 Gewichtsteile des Kautschuks auf Epihalohydrinbasis, beträgt, und
ein Gehalt der Hydrotalcitverbindung mehr als 3 Gewichtsteile und weniger als 10 Gewichtsteile, bezogen auf 100 Gewichtsteile des Kautschuks auf Epihalohydrinbasis, beträgt, wobei die Jodadsorptionsmenge und die spezifische Oberfläche nach Stickstoffadsorption wie in der Beschreibung angegeben gemessen werden.

2. Die Kautschukzusammensetzung auf Epihalohydrinbasis nach Anspruch 1, wobei die Jodadsorptionsmenge des Rußes 110 bis 150 mg/g beträgt.

3. Die Kautschukzusammensetzung auf Epihalogenhydrinbasis nach Anspruch 1 oder 2, wobei die spezifische Oberfläche nach Stickstoffadsorption des Rußes 110 bis 145 m² /g beträgt.

4. Kautschukzusammensetzung auf Epihalohydrinbasis nach irgendeinem der Ansprüche 1 bis 3, wobei die Hydrotalcitverbindung eine Verbindung der folgenden allgemeinen Formel (1) ist:
MgₓZn_{y}Al_{z}(OH)_{2(x+y)+3z-2}CO₃·mH₂O (1)
wobei in der obigen allgemeinen Formel (1) x = 1 bis 10, y = 0 bis 9, x+y = 1 bis 10, z = 1 bis 5, "m" 0 oder eine positive reelle Zahl darstellt.

5. Vernetzter Kautschuk, erhalten durch Vernetzen der Kautschukzusammensetzung auf Epihalohydrinbasis nach irgendeinem der Ansprüche 1 bis 4.

6. Kautschuklaminat, umfassend
eine Kautschukschicht (A) auf Epihalohydrinbasis, die sich aus der Kautschukzusammensetzung auf Epihalohydrinbasis nach einem der Ansprüche 1 bis 4 zusammensetzt, und
eine Fluorkautschukschicht (B), die sich aus einer Fluorkautschukzusammensetzung zusammensetzt, die einen Fluorkautschuk und ein Vernetzungsmittel enthält.

7. Kautschuklaminat nach Anspruch 6, wobei die Kautschukschicht (A) auf Epihalohydrinbasis eine Schicht ist, die aus einem vernetzten Produkt der Kautschukzusammensetzung auf Epihalohydrinbasis gebildet ist, und die Fluorkautschukschicht (B) eine Schicht ist, die aus einem vernetzten Produkt der Fluorkautschukzusammensetzung gebildet ist.

8. Schlauch, erhalten unter Verwendung des Kautschuklaminats nach Anspruch 7.

## Revendications

1. Composition de caoutchouc à base d'épihalohydrine comprenant un caoutchouc à base d'épihalohydrine, un noir de carbone, un agent de réticulation à base de quinoxaline et un composé hydrotalcite, dans laquelle
le noir de carbone a une quantité d'adsorption d'iode de 100 mg/g ou plus et une surface spécifique d'adsorption d'azote de 95 à 150 m²/g,
une teneur en agent de réticulation à base de quinoxaline est de 0,01 à 2 parties en poids par rapport à 100 parties en poids du caoutchouc à base d'épihalohydrine, et
une teneur en composé hydrotalcite est supérieure à 3 parties en poids et inférieure à 10 parties en poids par rapport à 100 parties en poids du caoutchouc à base d'épihalohydrine, dans laquelle la quantité d'adsorption d'iode et la surface spécifique d'adsorption d'azote sont mesurées comme indiqué dans la description.

2. Composition de caoutchouc à base d'épihalohydrine selon la revendication 1, dans laquelle la quantité d'adsorption d'iode du noir de carbone est de 110 à 150 mg/g.

3. Composition de caoutchouc à base d'épihalohydrine selon la revendication 1 ou 2, dans laquelle la surface spécifique d'adsorption d'azote du noir de carbone est de 110 à 145 m²/g.

4. Composition de caoutchouc à base d'épihalohydrine selon l'une quelconque des revendications 1 à 3, dans laquelle le composé hydrotalcite est un composé représenté par une formule générale (1) suivante :
MgₓZn_{y}Al_{z}(OH)_{2(x+y)+3z-2}CO₃·mH₂O (1)
où, dans la formule générale (1) ci-dessus, x = 1 à 10, y = 0 à 9, x+y = 1 à 10, z = 1 à 5, « m » représente 0 ou un nombre réel positif.

5. Caoutchouc réticulé obtenu par réticulation de la composition de caoutchouc à base d'épihalohydrine selon l'une quelconque des revendications 1 à 4.

6. Stratifié de caoutchouc comprenant
une couche de caoutchouc à base d'épihalohydrine (A) composée de la composition de caoutchouc à base d'épihalohydrine selon l'une quelconque des revendications 1 à 4, et
une couche de caoutchouc fluoré (B) composée d'une composition de caoutchouc fluoré comprenant un caoutchouc fluoré et un agent de réticulation.

7. Stratifié de caoutchouc selon la revendication 6, dans lequel la couche de caoutchouc à base d'épihalohydrine (A) est une couche formée d'un produit réticulé de la composition de caoutchouc à base d'épihalohydrine, et la couche de caoutchouc fluoré (B) est une couche formée d'un produit réticulé de la composition de caoutchouc fluoré.

8. Tuyau obtenu en utilisant le stratifié de caoutchouc selon la revendication 7.
